(19) Europäisches Patentamt
European Patent Office
Office européen des brevets

(11) **EP 1 603 835 B1**

(12) **FASCICULE DE BREVET EUROPEEN**

(45) Date de publication et mention
de la délivrance du brevet:
**06.05.2009 Bulletin 2009/19**

(51) Int Cl.:
***C01F 17/00*** *(2006.01)*

(21) Numéro de dépôt: **04742267.0**

(22) Date de dépôt: **17.03.2004**

(86) Numéro de dépôt international:
**PCT/FR2004/000649**

(87) Numéro de publication internationale:
**WO 2004/085314 (07.10.2004 Gazette 2004/41)**

(54) **COMPOSITION A BASE D OXYDES DE CERIUM ET DE ZIRCONIUM A SURFACE SPECIFIQUE STABLE ENTRE 900°C ET 1000°C, SON PROCEDE DE PREPARATION ET SON UTILISATION COMME CATALYSEUR**

ZUSAMMENSETZUNG AUF BASIS VON CER- UND ZIRCONIUMOXIDEN MIT EINER ZWISCHEN 900°C UND 1000°C STABILEN SPEZIFISCHEN OBERFLÄCHE, HERSTELLUNGSVERFAHREN DAFÜR UND VERWENDUNG DAVON ALS KATALYSATOR

COMPOSITION BASED ON CERIUM AND ZIRCONIUM OXIDES HAVING A SPECIFIC SURFACE WHICH IS STABLE BETWEEN 900°C AND 1000°C, METHOD FOR THE PRODUCTION AND USE THEREOF AS A CATALYST

(84) Etats contractants désignés:
**AT BE BG CH CY CZ DE DK EE ES FI FR GB GR HU IE IT LI LU MC NL PL PT RO SE SI SK TR**

(30) Priorité: **18.03.2003 FR 0303291**

(43) Date de publication de la demande:
**14.12.2005 Bulletin 2005/50**

(73) Titulaire: **Rhodia Electronics and Catalysis**
**17041 La Rochelle Cedex (FR)**

(72) Inventeurs:
• **LARCHER, Olivier**
**F-17180 Pérégny (FR)**

• **MONIN, David**
**F-75014 Paris (FR)**
• **ROHART, Emmanuel**
**F-17138 Puilboreau (FR)**

(74) Mandataire: **Dubruc, Philippe**
**Rhodia Services,**
**Direction de la Propriété Industrielle,**
**40, rue de la Haie-Coq**
**93306 Aubervilliers Cedex (FR)**

(56) Documents cités:
**EP-A- 0 955 267        US-A- 5 532 198**
**US-A- 5 723 101**

**Description**

La présente invention concerne des compositions à base d'un oxyde de cérium, d'un oxyde de zirconium et, éventuellement d'un oxyde d'une autre terre rare, à surface spécifique stable entre 900°C et 1000°C, son procédé de préparation et son utilisation comme catalyseur.

On sait que l'oxyde de zirconium et l'oxyde de cérium apparaissent aujourd'hui comme deux constituants particulièrement intéressants des catalyseurs pour le traitement des gaz d'échappement des moteurs à combustion interne (catalyse postcombustion automobile), notamment pour les catalyseurs dits multifonctionnels. Par multifonctionnels, on entend les catalyseurs capables d'opérer non seulement l'oxydation en particulier du monoxyde de carbone et des hydrocarbures présents dans les gaz d'échappement mais également la réduction en particulier des oxydes d'azote également présents dans ces gaz (catalyseurs "trois voies").

Les catalyseurs de ce type disponibles actuellement sont généralement capables de conserver une surface spécifique à une valeur relativement importante pour des températures comprises entre environ 900°C et 1200°C. Toutefois, la variation de cette surface entre les deux bornes de températures ci-dessus peut être très importante dans les cas des catalyseurs connus et il y a un besoin pour des produits pouvant ne présenter qu'une faible variation relative de surface dans cette gamme de températures. Une faible variation permet en effet de diminuer le frittage des métaux précieux qui sont déposés sur les catalyseurs et donc de rendre ces métaux plus accessibles dans toute la gamme de températures concernée.

L'objet de l'invention est la mise au point de tels produits.

Dans ce but, et selon un premier mode de réalisation, la composition de l'invention consiste essentiellement en un oxyde de cérium et en un oxyde de zirconium, et elle est caractérisée en ce qu'après une première calcination à 900°C pendant 4 heures, puis une seconde calcination à 1000°C pendant 10 heures, elle présente une variation de sa surface spécifique d'au plus 5%.

Selon un second mode de réalisation, la composition de l'invention est à base d'un oxyde de cérium, d'un oxyde de zirconium et d'au moins un oxyde d'une terre rare autre que le cérium, et elle est caractérisée en ce qu'après une première calcination à 900°C pendant 4 heures, puis une seconde calcination à 1000°C pendant 10 heures, elle présente une variation de sa surface spécifique d'au plus 5%.

L'invention concerne aussi un procédé de préparation de telles compositions qui est caractérisé en ce qu'il comprend les étapes suivantes:

- (a) on forme un mélange comprenant des composés de cérium, de zirconium et, le cas échéant, de la terre rare précitée;
- (b) on met en présence ledit mélange avec un composé basique ce par quoi on obtient un précipité;
- (c) on chauffe en milieu aqueux ledit précipité dans une enceinte close à une température d'au moins 130°C;
- (d) on ajoute au précipité obtenu à l'étape précédente un tensio-actif choisi parmi ceux du type éthoxylats d'alcools gras carboxyméthylés;
- (e) on calcine le précipité ainsi obtenu.

D'autres caractéristiques, détails et avantages de l'invention apparaîtront encore plus complètement à la lecture de la description qui va suivre, ainsi que des divers exemples concrets mais non limitatifs destinés à l'illustrer.

On entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

Par terre rare on entend les éléments du groupe constitué par l'yttrium et les éléments de la classification périodique de numéro atomique compris inclusivement entre 57 et 71.

Les teneurs sont données en oxydes sauf indication contraire. L'oxyde de cérium est sous forme d'oxyde cérique.

On précise pour la suite de la description que, sauf indication contraire, dans les fourchettes de valeurs qui sont données, les valeurs aux bornes sont incluses.

Les compositions de l'invention se présentent selon deux modes de réalisation qui diffèrent par la nature de leurs constituants. Selon le premier mode, ces compositions consistent essentiellement en de l'oxyde de cérium et de l'oxyde de zirconium. On entend par là que la composition ne contient pas d'autre oxyde d'un autre élément qui puisse être un stabilisant de la surface de celle-ci sous forme d'une terre rare autre que le cérium.

Les proportions relatives de l'oxyde de cérium et de l'oxyde de zirconium peuvent varier dans une large gamme. Ainsi, le rapport massique oxyde de cérium/oxyde de zirconium peut varier par exemple entre environ 10/90 et environ 90/10, plus particulièrement entre 20/80 et 60/40 et encore plus particulièrement entre 20/80 et 40/60.

Dans le cas du second mode de réalisation de l'invention, les compositions sont à base d'oxyde de cérium, d'oxyde de zirconium et d'au moins un oxyde d'une terre rare autre que le cérium. Il s'agit donc dans ce cas de compositions qui contiennent au moins trois oxydes et, plus particulièrement, quatre. La terre rare autre que le cérium peut être notamment choisie parmi l'yttrium, le lanthane, le néodyme et le praséodyme et leur combinaison. On peut citer ainsi plus particulièrement comme compositions selon ce second mode celles à base d'oxyde de cérium, d'oxyde de zirconium et d'oxyde de lanthane, celles à base d'oxyde de cérium, d'oxyde de zirconium, d'oxyde de lanthane et d'oxyde de néodyme et celles à base d'oxyde de cérium, d'oxyde de zirconium, d'oxyde de lanthane et d'oxyde de praséodyme.

Toujours dans le cas de ce second mode, la teneur en oxyde de la terre rare autre que le cérium est généralement d'au plus 30% en masse et notamment d'au plus 20% par rapport à l'ensemble de la composition. Cette teneur peut être plus particulièrement d'au plus 15% et encore plus particulièrement d'au plus 10%. Elle est aussi habituellement d'au moins 1 % et plus particulièrement d'au moins 5%. Dans le cas de ce second mode, le rapport massique oxyde de cérium/oxyde de zirconium peut varier notamment entre 0,25 et 4, plus particulièrement entre 0,25 et 2 et encore plus particulièrement entre 0,25 et 1.

La caractéristique essentielle des compositions de l'invention est la stabilité de leur surface entre 900°C et 1000°C. Pour la présente description, cette stabilité est mesurée par la variation entre la surface ($S_{900}$) présentée après calcination à 900°C pendant 4 heures, la surface ($S_{1000}$) présentée après calcination à 1000°C pendant 10 heures et la surface ($S_{1200}$) présentée après calcination à 1200°C pendant 10 heures, cette variation étant exprimée par les rapports respectifs ($S_{900}$ - $S_{1000}$)/$S_{900}$ et ($S_{1000}$ - $S_{1200}$)/$S_{1000}$ exprimés en %.

Dans le cas du premier mode de réalisation, cette variation entre 900°C et 1000°C est d'au plus 20%. Dans le cas du second mode, cette variation entre 900°C et 1000°C est d'au plus 15%.

Ces variations peuvent être même plus faibles c'est à dire inférieure à 10% voire inférieure à 5%. Selon un mode de réalisation préféré, ces variations peuvent être nulles ou proches de 0.

Cette stabilité peut s'observer aussi entre 900°C et 1100°C, c'est à dire que les variations de surface qui ont été données ci-dessus entre 900°C et 1000°C (notamment au plus 20% et au plus 15% selon respectivement le premier ou le second mode) s'appliquent de même dans la gamme de 900°C, 4 heures à 1100°C, 10 heures.

Cette stabilité se manifeste aussi à plus haute température. Ainsi, après une troisième calcination à 1200°C, les compositions présentent une variation de surface spécifique, mesurée entre la valeur de la surface après calcination à 1000°C et celle de la surface après calcination à 1200°C, d'au plus 75%, de préférence d'au plus 60%.

Les surfaces spécifiques des compositions de l'invention peuvent varier dans une large gamme. Généralement, cette surface spécifique après calcination à 900°C pendant 4 heures est d'au moins 8m$^2$/g. Dans le cas des compositions selon le second mode, cette surface peut être plus particulièrement d'au moins 15m$^2$/g notamment. L'invention permet d'obtenir dans les mêmes conditions de température et de durée des compositions ayant des surfaces allant jusqu'à au moins 15m$^2$/g pour celles du premier mode et au moins jusqu'à 35m$^2$/g pour celle du second mode. A 1000°C et après 10 heures, des valeurs sensiblement identiques peuvent se présenter compte tenu de la stabilité de la surface entre ces deux températures.

Après calcination à 1200°C pendant 10 heures, les compositions de l'invention présentent une surface d'au moins 3m$^2$/g, de préférence d'au moins 5m$^2$/g, plus particulièrement d'au moins 8m$^2$/g, notamment dans le cas des compositions selon le second mode pour ces deux dernières valeurs.

Les compositions de l'invention ont en outre comme propriété supplémentaire une capacité de stockage de l'oxygène (OSC) sensiblement constante entre 900°C et 1000°C. Ainsi, pour un produit calciné à 1000°C, la diminution de l'OSC est d'au plus 20%, de préférence d'au plus 15%, par rapport à la valeur de l'OSC du produit calciné à 900°C.

Les compositions de l'invention présentent par ailleurs une porosité spécifique. Elles contiennent en effet des mésopores, c'est à dire des pores dont la taille est comprise entre 10 nm et 200 nm et dont la distribution est centrée autour de 50 nm environ. Cette taille et cette distribution des pores sont substantiellement identiques pour les compositions calcinées à 900°C puis à 1100°C. Ces valeurs de taille sont obtenues par porosimétrie au mercure (analyse faite avec un porosimètre Autopore 9410 de Micromeritic's comprenant deux postes basse pression et un poste haute pression).

Le procédé de préparation des compositions de l'invention va maintenant être décrit.

La première étape du procédé consiste donc à préparer un mélange en milieu liquide d'un composé du zirconium, d'un composé du cérium et éventuellement de la terre rare précitée.

Le mélange se fait généralement dans un milieu liquide qui est l'eau de préférence.

Les composés sont de préférence des composés solubles. Ce peut être notamment des sels de zirconium, de cérium et de terre rare. Ces composés peuvent être choisis parmi les nitrates, les sulfates, les acétates, les chlorures, les nitrates céri-ammoniacaux.

A titre d'exemples, on peut ainsi citer le sulfate de zirconium, le nitrate de zirconyle ou le chlorure de zirconyle. Le nitrate de zirconyle est utilisé le plus généralement. On peut citer aussi notamment les sels de cérium IV tels que nitrates ou nitrates céri-ammoniacaux par exemple, qui conviennent ici particulièrement bien. On peut utiliser du nitrate cérique. Il est avantageux d'utiliser des sels de pureté d'au moins 99,5% et plus particulièrement d'au moins 99,9%. Une solution aqueuse de nitrate cérique peut par exemple être obtenue par réaction de l'acide nitrique sur un oxyde cérique hydraté préparé d'une manière classique par réaction d'une solution d'un sel céreux, par exemple le nitrate céreux, et d'une solution d'ammoniaque en présence d'eau oxygénée. On peut également, en particulier, utiliser une solution de nitrate cérique obtenue selon le procédé d'oxydation électrolytique d'une solution de nitrate céreux tel que décrit dans le document FR-A- 2 570 087, et qui constitue ici une matière première intéressante.

On notera ici que les solutions aqueuses de sels de cérium et de sels de zirconyle peuvent présenter une certaine acidité libre initiale qui peut être ajustée par l'addition d'une base ou d'un acide. Il est cependant autant possible de mettre en oeuvre une solution initiale de sels de cérium et de zirconium présentant effectivement une certaine acidité libre comme mentionné ci-dessus, que des solutions qui auront été préalablement neutralisées de façon plus ou moins poussée. Cette neutralisation peut se faire par addition d'un composé basique au mélange précité de manière à limiter cette acidité. Ce composé basique peut être par exemple une solution d'ammoniaque ou encore d'hydroxydes d'alcalins (sodium, potassium,...), mais de préférence une solution d'ammoniaque.

On notera enfin que lorsque le mélange de départ contient un composé du cérium dans lequel celui-ci est sous forme de Ce III, il est préférable de faire intervenir dans le cours du procédé un agent oxydant, par exemple de l'eau oxygénée. Cet agent oxydant peut être utilisé en étant ajouté au milieu réactionnel lors de l'étape (a) ou lors de l'étape (b), notamment à la fin de celle-ci.

Il est aussi possible d'utiliser un sol comme composé de départ du zirconium ou du cérium. Par sol on désigne tout système constitué de fines particules solides de dimensions colloïdales, c'est à dire des dimensions comprises entre environ 1 nm et environ 500nm, à base d'un composé de zirconium ou de cérium ce composé étant généralement un oxyde et/ou un oxyde hydraté de zirconium ou de cérium, en suspension dans une phase liquide aqueuse, lesdites particules pouvant en outre, éventuellement, contenir des quantités résiduelles d'ions liés ou adsorbés tels que par exemple des nitrates, des acétates, des chlorures ou des ammoniums. On notera que dans un tel sol, le zirconium ou le cérium peuvent se trouver soit totalement sous la forme de colloïdes, soit simultanément sous la forme d'ions et sous la forme de colloïdes.

Le mélange peut être indifféremment obtenu soit à partir de composés initialement à l'état solide que l'on introduira par la suite dans un pied de cuve d'eau par exemple, soit encore directement à partir de solutions de ces composés puis mélange, dans un ordre quelconque, desdites solutions.

Dans la deuxième étape (b) du procédé, on met en présence ledit mélange avec un composé basique. On peut utiliser comme base ou composé basique les produits du type hydroxyde. On peut citer les hydroxydes d'alcalins ou d'alcalino-terreux. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée. Le composé basique est généralement utilisé sous forme d'une solution aqueuse.

La manière d'effectuer la mise en présence du mélange et de la solution, c'est à dire l'ordre d'introduction de ceux-ci n'est pas critique. Toutefois, cette mise en présence peut se faire en introduisant le mélange dans la solution du composé basique.

La mise en présence ou la réaction entre le mélange et la solution, notamment l'addition du mélange dans la solution du composé basique, peut être effectuée en une seule fois, graduellement ou en continu, et elle est de préférence réalisée sous agitation. Elle est de préférence conduite à température ambiante.

L'étape suivante (c) du procédé est l'étape de chauffage du précipité en milieu aqueux.

Ce chauffage peut être réalisé directement sur le milieu réactionnel obtenu après réaction avec le composé basique ou sur une suspension obtenue après séparation du précipité du milieu réactionnel, lavage éventuel et remise dans l'eau du précipité. La température à laquelle est chauffé le milieu est d'au moins 130°C. L'opération de chauffage peut être conduite en introduisant le milieu liquide dans une enceinte close (réacteur fermé du type autoclave). Dans les conditions de températures données ci-dessus, et en milieu aqueux, on peut préciser, à titre illustratif, que la pression dans le réacteur fermé peut varier entre une valeur supérieure à 1 Bar ($10^5$ Pa) et 165 Bar ($1,65. 10^7$ Pa), de préférence entre 5 Bar ($5. 10^5$ Pa) et 165 Bar ($1,65. 10^7$ Pa).

Le chauffage peut être conduit soit sous air, soit sous atmosphère de gaz inerte, de préférence l'azote.

La durée du chauffage peut varier dans de larges limites, par exemple entre 1 et 48 heures, de préférence entre 2 et 24 heures. De même, la montée en température s'effectue à une vitesse qui n'est pas critique, et on peut ainsi atteindre la température réactionnelle fixée en chauffant le milieu par exemple entre 30 minutes et 4 heures, ces valeurs étant données à titre tout à fait indicatif.

Le milieu soumis au chauffage présente généralement un pH d'au moins 5. De préférence, ce pH est basique, c'est à dire qu'il est supérieur à 7 et, plus particulièrement, d'au moins 8.

Il est possible de faire plusieurs chauffages. Ainsi, on peut remettre en suspension dans l'eau, le précipité obtenu après l'étape de chauffage et éventuellement un lavage puis effectuer un autre chauffage du milieu ainsi obtenu. Cet autre chauffage se fait dans les mêmes conditions que celles qui ont été décrites pour le premier.

Dans une étape suivante (d) du procédé, on ajoute au précipité ainsi obtenu un tensioactif qui est choisi parmi ceux du type éthoxylats d'alcools gras carboxyméthylés.

Par produit du type éthoxylats d'alcool gras carboxyméthylés on entend les produits constitués d'alcools gras éthoxylés ou propoxylés comportant en bout de chaîne un groupement $CH_2$-COOH.

Ces produits peuvent répondre à la formule :

$$R_1\text{-O-}(CR_2R_3\text{-}CR_4R_5\text{-O})_n\text{-}CH_2\text{-COOH}$$

dans laquelle $R_1$ désigne une chaîne carbonée, saturée ou insaturée, dont la longueur est généralement d'au plus 22 atomes de carbone, de préférence d'au moins 12 atomes de carbone; $R_2$, $R_3$, $R_4$ et $R_5$ peuvent être identiques et représenter l'hydrogène ou encore $R_2$ peut représenter un groupe $CH_3$ et $R_3$, $R_4$ et $R_5$ représentent l'hydrogène; n est un nombre entier non nul pouvant aller jusqu'à 50 et plus particulièrement compris entre 5 et 15, ces valeurs étant incluses. On notera qu'un tensio-actif peut être constitué d'un mélange de produits de la formule ci-dessus pour lesquels $R_1$ peut être saturé et insaturé respectivement ou encore des produits comportant à la fois des groupements $-CH_2$-$CH_2$-O- et -$C(CH_3)$-$CH_2$-O-.

On notera aussi qu'il est tout à fait possible d'utiliser en mélange plusieurs tensio-actifs du type ci-dessus.

L'addition du tensio-actif peut se faire de deux manières. Il peut être ajouté directement dans la suspension de précipité issue de l'étape précédente de chauffage. Il peut aussi être ajouté au précipité solide après séparation de celui-ci par tout moyen connu du milieu dans lequel a eu lieu le chauffage.

La quantité de tensioactif utilisée peut varier entre environ 30% et 200% et notamment entre 50% et 200% , quantité exprimée en masse de tensioactif par rapport à la masse de la composition. Plus particulièrement, cette quantité peut être comprise entre 50% et 150% et encore plus particulièrement entre 50% et 100%.

Dans une dernière étape du procédé selon l'invention, le précipité récupéré est ensuite calciné. Cette calcination permet de développer la cristallinité du produit formé et elle peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en oeuvre est plus élevée. Une telle calcination est généralement opérée sous air, mais une calcination menée par exemple sous gaz inerte ou sous atmosphère contrôlée (oxydante ou réductrice) n'est bien évidemment pas exclue.

En pratique, on limite généralement la température de calcination à un intervalle de valeurs comprises entre 300 et 900°C.

Les compositions de l'invention telles que décrites plus haut ou telles qu'obtenues dans le procédé étudié précédemment se présentent sous forme de poudres mais elles peuvent éventuellement être mises en forme pour se présenter sous forme de granulés, billes, cylindres ou nids d'abeille de dimensions variables.

Les compositions de l'invention peuvent être utilisées comme catalyseurs ou supports de catalyseur. Ainsi, l'invention concerne aussi des systèmes catalytiques comprenant les compositions de l'invention. Pour de tels systèmes, ces compositions peuvent ainsi être appliquées sur tout support utilisé habituellement dans le domaine de la catalyse, c'est à dire notamment des supports inertes thermiquement. Ce support peut être choisi parmi l'alumine, l'oxyde de titane, l'oxyde de cérium, l'oxyde de zirconium, la silice, les spinelles, les zéolites, les silicates, les phosphates de silicoaluminium cristallins, les phosphates d'aluminium cristallins.

Les compositions peuvent aussi être utilisées dans des systèmes catalytiques comprenant un revêtement (wash coat) à propriétés catalytiques et à base de ces compositions, sur un substrat du type par exemple monolithe métallique ou en céramique. Le revêtement peut comporter lui aussi un support du type de ceux mentionnés plus haut. Ce revêtement est obtenu par mélange de la composition avec le support de manière à former une suspension qui peut être ensuite déposée sur le substrat.

Ces systèmes catalytiques et plus particulièrement les compositions de l'invention peuvent trouver de très nombreuses applications. Ils sont ainsi particulièrement bien adaptés à, et donc utilisable dans la catalyse de diverses réactions telles que, par exemple, la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion, l'oxydation catalytique des suies émises par les moteurs à combustion interne comme les moteurs diesel ou essence fonctionnant en régime pauvre. Les systèmes catalytiques et les compositions de l'invention peuvent enfin être utilisés comme pièges à NOx.

Dans le cas de ces utilisations en catalyse, les compositions de l'invention sont employées en combinaison avec des métaux précieux, elles jouent ainsi le rôle de support pour ces métaux. La nature de ces métaux et les techniques d'incorporation de ceux-ci dans les compositions supports sont bien connues de l'homme du métier. Par exemple, les métaux peuvent être le platine, le rhodium, le palladium ou l'iridium, ils peuvent notamment être incorporés aux compositions par imprégnation.

Parmi les utilisations citées, le traitement des gaz d'échappement des moteurs à combustion interne (catalyse post combustion automobile) constitue une application particulièrement intéressante. De ce fait, l'invention concerne aussi un procédé de traitement des gaz d'échappement des moteurs à combustion interne qui est caractérisé en ce qu'on utilise à titre de catalyseur un système catalytique tel que décrit ci-dessus ou une composition selon l'invention et telle que décrite précédemment.

Des exemples vont maintenant être donnés.

EXEMPLES

On prépare différentes compositions selon le mode opératoire donné ci-dessous.

Dans un bécher agité, on introduit du nitrate de zirconium (80g/l), du nitrate de cérium à l'état d'oxydation III (496 g/l) et, selon les différentes compositions préparées, du nitrate de lanthane (454 g/l), du nitrate de néodyme (524 g/l) et/ou du nitrate de praséodyme. On complète ensuite avec de l'eau distillée de façon à obtenir 1 litre d'une solution de ces nitrates.

Dans un réacteur agité, on introduit une solution d'ammoniaque (12 mol/l), de l'eau oxygénée (110 volume) puis on complète avec de l'eau distillée de façon à obtenir un volume total de 1 litre. La quantité d'ammoniaque est calculée de façon à représenter 1,4 fois en mole la quantité d'ions nitrate présents dans le mélange à précipiter. La quantité d'eau oxygénée est calculée de façon à représenter 6 fois en mole la quantité d'ions cérium. La solution de nitrates est introduite en une heure dans le réacteur sous agitation constante de manière à obtenir une suspension.

La suspension obtenue est placée dans un autoclave en acier inoxydable équipé d'un mobile d'agitation. La température du milieu est portée à 150°C pendant 2 heures sous agitation.

La suspension ainsi obtenue est alors filtrée sur Büchner. On récupère un précipité contenant X % en masse d'oxyde.

A une masse Y (g) du précipité on mélange Z (g) d'un gel contenant U% en masse de tensio-actif jusqu'à l'obtention d'une pâte homogène. Le tensio-actif est un mélange de produits éthoxylés de formule R-O(-$CH_2$-$CH_2$-O)$_9$-$CH_2$-COOH où R est une chaîne carbonée de type palmitique (saturée) $C_{16}H_{33}$ ou de type oléïque (chaîne insaturée) $C_{18}H_{35}$ et de masse moléculaire moyenne de 825.

Le mélange obtenu est ensuite porté à 900°C pendant 4 heures en palier.

On donne dans le tableau 1 ci-dessous les valeurs de X, Y, Z et U pour les différents exemples.

Tableau 1

| Exemples | X | Y | Z | U |
|----------|------|-----|-------|-----|
| 1 | 18,8 | 50 | 9,4 | 100 |
| 2 | 19 | 50 | 6,17 | 90 |
| 3 | 22,3 | 50 | 7,25 | 90 |
| 4 | 30,5 | 48 | 9,52 | 90 |
| 5 | 25,9 | 50 | 15,15 | 100 |
| 6 | 19,8 | 50 | 3,86 | 90 |

On donne dans le tableau 2 ci-dessous les caractéristiques des compositions préparées.

Tableau 2

| Exemple | Composition | Proportion (% en masse d'oxyde) |
|---------|-------------|--------------------------------|
| 1 | $ZrO_2/CeO_2/La_2O_3/Nd_2O_3$ | 72/21/2/5 |
| 2 | $ZrO_2/CeO_2/La_2O/Nd_2O_3$ | 65/22/6,5/6,5 |
| 3 | $ZrO_2/CeO_2/La_2O_3$ | 55/40/5 |
| 4 | $ZrO_2/CeO_2/La_2O_3/Pr_2O_3$ | 30/60/3/7 |
| 5 | $ZrO_2/CeO_2$ | 60/40 |
| 6 | $ZrO_2/CeO_2/La_2O_3/Nd_2O_3$ | 72/21/2/5 |

La composition de l'exemple 1 après calcination à 1100°C présente des mésopores dont la taille est comprise entre 20 nm et 200 nm et dont la distribution est centrée autour de 50 nm.

On donne dans le tableau 3 ci-dessous pour les différents exemples les valeurs de surface et leur variation à différentes températures.

Tableau 3

| Exemple | Surface spécifique en m²/g | | | | |
|---|---|---|---|---|---|
| | 900°C (4h) | 1000°C (10h) | Variation* | 1200°C (10h) | Variation** |
| 1 | 21,2 | 20,3 | 4% | 9,6 | 50% |
| 2 | 18,2 | 17,3 | 5% | 10 | 40% |
| 3 | 16 | 14,7 | 8% | 8,4 | 39% |
| 4 | 12,3 | 11,7 | 5% | 5,7 | 49% |
| 5 | 10,7 | 10,5 | 2% | 5 | 51% |
| 6 | 29 | 29 | 0% | 10 | 66% |
| * Variation de la surface en % entre 900°C et 1000°C<br>** Variation de la surface en % entre 1000°C et 1200°C | | | | | |

La composition de l'exemple 1 présente en outre une surface de 20 m²/g après calcination à 1100°C, 10 heures.

On a mesuré par ailleurs les variations d'OSC dynamique du produit de l'exemple 1 en utilisant la méthode suivante.

30 mg de produit sont préalablement calcinés 4 heures à 900°C pour un premier échantillon et 4 heures à 1200°C pour un second échantillon. L'échantillon est placé dans un réacteur dont la température peut être régulée à 350°C, 400°C ou 450°C. On injecte dans ce réacteur des quantités déterminées de CO (5% dans l'hélium) et de $O_2$ (2,5% dans l'hélium) en alternance, sous une fréquence de 1 Hz (une injection pendant 1 seconde) et à un débit de 200cm³/m. On analyse à la sortie du réacteur les teneurs en CO et $O_2$ à l'aide d'un spectromètre de masse.

On exprime l'OSC en ml d'$O_2$ par gramme et par seconde à partir de la formule :

$$OSC \ (ml.g^{-1}.s^{-1}) = [\Delta(CO) \times dCO] / (2 \times P)$$

dans laquelle $\Delta(CO)$ représente la quantité de CO convertie à chaque seconde, dCO le débit de CO et P la masse de l'échantillon.

On donne dans le tableau 4 ci-dessous, les variations d'OSC du produit de l'exemple 1.

Tableau 4

| | OSC (ml $O_2$/g/s) | |
|---|---|---|
| Température | 900°C | 1200°C |
| Exemple 1 | 0,25 | 0,22 |

**Revendications**

1. Composition consistant essentiellement en un oxyde de cérium et en un oxyde de zirconium ou à base d'un oxyde de cérium, d'un oxyde de zirconium et d'au moins un oxyde d'une terre rare autre que le cérium, **caractérisée en ce qu'**après une première calcination à 900°C pendant 4 heures, puis une seconde calcination à 1000°C pendant 10 heures, elle présente une variation de sa surface spécifique d'au plus 5%.

2. Composition selon la revendication 1, **caractérisée en ce qu'**elle présente après calcination à 900°C pendant 4 heures une surface d'au moins 8m²/g.

3. Composition consistant essentiellement en un oxyde de cérium et en un oxyde de zirconium, **caractérisée en ce qu'**après une calcination à 900°C pendant 4 heures, puis une autre calcination à 1000°C pendant 10 heures, elle présente une variation de sa surface spécifique d'au plus 20% et **en ce qu'**après une calcination à 900°C pendant 4 heures, puis une autre calcination à 1100°C pendant 10 heures, elle présente une variation de sa surface spécifique d'au plus 20%.

4. Composition à base d'un oxyde de cérium, d'un oxyde de zirconium et d'au moins un oxyde d'une terre rare autre que le cérium **caractérisée en ce qu'**elle présente après une calcination à 900°C pendant 4 heures, puis une autre calcination à 1000°C pendant 10 heures, une variation de sa surface spécifique d'au plus 15%, et **en ce qu'**après une calcination à 900°C pendant 4 heures, puis une autre calcination à 1100°C pendant 10 heures, elle présente une variation de sa surface spécifique d'au plus 20%.

5. Composition selon la revendication 3, **caractérisée en ce qu'**elle présente après calcination à 900°C pendant 4 heures une surface d'au moins $8m^2/g$.

6. Composition selon la revendication 4, **caractérisée en ce qu'**elle présente après calcination à 900°C pendant 4 heures une surface d'au moins $15m^2/g$.

7. Composition selon l'une des revendications précédentes, **caractérisée en ce qu'**elle présente une surface spécifique après calcination à 1000°C 10 heures d'au moins $8m^2/g$, plus particulièrement d'au moins $15m^2/g$.

8. Composition selon l'une des revendications précédentes, **caractérisée en ce qu'**elle présente une surface spécifique après calcination à 1200°C 10 heures d'au moins $3m^2/g$.

9. Composition selon l'une des revendications 1, 2, 4 et 6 à 8 et à base d'un oxyde de cérium, d'un oxyde de zirconium et d'au moins un oxyde d'une terre rare autre que le cérium, **caractérisée en ce qu'**elle présente une surface spécifique après calcination à 1200°C 10 heures d'au moins $8m^2/g$.

10. Composition selon l'une des revendications 3 à 9, **caractérisée en ce qu'**après une première calcination à 900°C pendant 4 heures, puis une seconde calcination à 1000°C pendant 10 heures, elle présente une variation de sa surface spécifique d'au plus 10%.

11. Composition selon l'une des revendications 3 à 9, **caractérisée en ce qu'**après une première calcination à 900°C pendant 4 heures, puis une seconde calcination à 1000°C pendant 10 heures, elle présente une variation de sa surface spécifique d'au plus 5%.

12. Composition selon l'une des revendications 3 à 9, **caractérisée en ce qu'**après une troisième calcination à 1200°C, elle présente une variation de surface spécifique, mesurée entre la valeur de la surface après calcination à 1000°C 10 heures et celle de la surface après calcination à 1200°C 10 heures, d'au plus 75%, de préférence d'au plus 60%.

13. Composition selon l'une des revendications précédentes, **caractérisée en ce qu'**elle présente un rapport massique oxyde de cérium/oxyde de zirconium compris entre 10/90 et 90/10, plus particulièrement entre 20/80 et 60/40.

14. Composition selon l'une des revendications 1, 2, 4 et 6 à 13 et à base d'un oxyde de cérium, d'un oxyde de zirconium et d'au moins un oxyde d'une terre rare autre que le cérium, **caractérisée en ce qu'**elle présente un rapport massique oxyde de cérium/oxyde de zirconium compris entre 0,25 et 4, plus particulièrement entre 0,25 et 2.

15. Composition selon l'une des revendications 1, 2, 4 et 6 à 14, **caractérisée en ce qu'**elle comprend au moins un oxyde d'une terre rare autre que le cérium qui est choisie parmi le lanthane, le néodyme et le praséodyme.

16. Composition selon l'une des revendications 1, 2, 4 et 6 à 15, **caractérisée en ce qu'**elle présente une teneur en oxyde d'une terre rare autre que le cérium d'au plus 30%, plus particulièrement d'au plus 20%, en masse.

17. Procédé de préparation d'une composition selon l'une des revendications précédentes, **caractérisé en ce qu'**il comprend les étapes suivantes:

 - (a) on forme un mélange comprenant des composés de cérium, de zirconium et, le cas échéant, de la terre rare précitée;
 - (b) on met en présence ledit mélange avec un composé basique ce par quoi on obtient un précipité;
 - (c) on chauffe en milieu aqueux ledit précipité dans une enceinte close à une température d'au moins 130°C;
 - (d) on ajoute au précipité obtenu à l'étape précédente un tensio-actif choisi parmi ceux du type éthoxylats d'alcools gras carboxyméthylés;

- (e) on calcine le précipité ainsi obtenu.

**18.** Procédé selon la revendication 17, **caractérisé en ce que** la mise en présence du mélange précité avec le composé basique se fait en introduisant ledit mélange dans le composé basique sous forme d'une solution.

**19.** Système catalytique, **caractérisé en ce qu'**il comprend une composition selon l'une des revendications 1 à 16.

**20.** Procédé de traitement des gaz d'échappement des moteurs à combustion interne, **caractérisé en ce qu'**on utilisé à titre de catalyseur un système catalytique selon la revendication 20 ou une composition selon l'une des revendications 1 à 16.


**Claims**

**1.** Composition essentially consisting of a cerium oxide and a zirconium oxide or based on a cerium oxide, a zirconium oxide and at least one oxide of a rare earth other than cerium, said composition being **characterized in that**, after a first calcination at 900°C for 4 hours followed by a second calcination at 1000°C for 10 hours, it exhibits a change in its specific surface area of at most 5%

**2.** Composition according to Claim 1, **characterized in that** it has a surface area of at least 8 $m^2$/g after calcination at 900°C for 4 hours.

**3.** Composition essentially consisting of a cerium oxide and a zirconium oxide, said composition being **characterized in that**, after a calcination at 900°C for 4 hours followed by another calcination at 1000°C for 10 hours, it exhibits a change in its specific surface area of at most 20%, and **in that** after a calcination at 900°C for 4 hours followed by another calcination at 1100°C for 10 hours, it exhibits a change in its specific surface area of at most 20%.

**4.** Composition based on a cerium oxide, a zirconium oxide and at least one oxide of a rare earth other than cerium, said composition being **characterized in that**, after a calcination at 900°C for 4 hours followed by another calcination at 1000°C for 10 hours, it exhibits a change in its specific surface area of at most 15%, and **in that** after a calcination at 900°C for 4 hours followed by another calcination at 1100°C for 10 hours, it exhibits a change in its specific surface area of at most 20%.

**5.** Composition according to Claim 3, **characterized in that** it has a surface area of at least 8 $m^2$/g after calcination at 900°C for 4 hours.

**6.** Composition according to Claim 4, **characterized in that** it has a surface area of at least 15 $m^2$/g after calcination at 900°C for 4 hours.

**7.** Composition according to one of the preceding claims, **characterized in that** it has a specific surface area of at least 8 $m^2$/g, more particularly at least 15 $m^2$/g, after calcination at 1000°C for 10 hours.

**8.** Composition according to one of the preceding claims, **characterized in that** it has a specific surface area of at least 3 $m^2$/g after calcination at 1200 °C for 10 hours.

**9.** Composition according to one of Claims 1, 2, 4 and 6 to 8 and based on a cerium oxide, a zirconium oxide and at least one oxide of a rare earth other than cerium, said composition being **characterized in that** it has a specific surface area of at least 8 $m^2$/g after calcination at 1200°C for 10 hours.

**10.** Composition according to one of Claims 3 to 9, **characterized in that**, after a first calcination at 900°C for 4 hours followed by a second calcination at 1000°C for 10 hours, it exhibits a change in its specific surface area of at most 10%.

**11.** Composition according to one of Claims 3 to 9, **characterized in that**, after a first calcination at 900°C for 4 hours followed by a second calcination at 1000°C for 10 hours, it exhibits a change in its specific surface area of at most 5%.

**12.** Composition according to one of Claims 3 to 9, **characterized in that**, after a third calcination at 1200°C, it exhibits a change in specific surface area, measured between the surface area after calcination at 1000°C for 10 hours and the surface area after calcination at 1200°C for 10 hours, of at most 75%, preferably at most 60%.

**13.** Composition according to one of the preceding claims, **characterized in that** it has a cerium oxide/zirconium oxide mass ratio of between about 10/90 and about 90/10, more particularly between 20/80 and 60/40.

**14.** Composition according to one of Claims 1, 2, 4 and 6 to 13 and based on a cerium oxide, a zirconium oxide and at least one oxide of a rare earth other than cerium, said composition being **characterized in that** it has a cerium oxide/zirconium oxide mass ratio of between 0.25 and 4, more particularly between 0.25 and 2.

**15.** Composition according to one of Claims 1, 2, 4 and 6 to 14, **characterized in that** it includes at least one oxide of a rare earth other than cerium which is chosen from lanthanum, neodymium and praseodymium.

**16.** Composition according to one of Claims 1, 2, 4 and 6 to 15, **characterized in that** its content of an oxide of a rare earth other than cerium is at most 30% by weight, more particularly at most 20% by weight.

**17.** Method of preparing a composition according to one of the preceding claims, **characterized in that** it comprises the following steps:

- (a) a mixture comprising a cerium compound, a zirconium compound and, if appropriate, a compound of the aforementioned rare earth is formed;
- (b) said mixture is brought into contact with a basic compound, by means of which a precipitate is obtained;
- (c) said precipitate is heated in aqueous medium in a sealed chamber at a temperature of at least 130°C;
- (d) a surfactant of the carboxymethylated fatty alcohol ethoxylate type is added to the precipitate obtained in the previous step; and
- (e) the precipitate thus obtained is calcined.

**18.** Method according to Claim 17, **characterized in that** the aforementioned mixture is brought into contact with the basic compound by introducing said mixture into the basic compound in the form of a solution.

**19.** Catalytic system, **characterized in that** it comprises a composition according to one of claims 1 to 16.

**20.** Method of treating the exhaust gases of internal combustion engines, **characterized in that** a catalytic system according to Claim 20 or a composition according to one of claims 1 to 16 is used as catalyst.

**Patentansprüche**

**1.** Zusammensetzung, im wesentlichen bestehend aus einem Ceroxid und einem Zirconiumoxid oder auf Basis eines Ceroxids, eines Zirconiumoxids und mindestens eines Oxids eines anderen Seltenerdmetalls als Cer, **dadurch gekennzeichnet, daß** sie nach einer ersten Calcinierung bei 900°C über einen Zeitraum von 4 Stunden und dann einer zweiten Calcinierung bei 1000°C über einen Zeitraum von 10 Stunden eine Änderung ihrer spezifischen Oberfläche von höchstens 5% aufweist.

**2.** Zusammensetzung nach Anspruch 1, **dadurch gekennzeichnet, daß** sie nach Calcinierung bei 900°C über einen Zeitraum von 4 Stunden eine Oberfläche von mindestens 8 m$^2$/g aufweist.

**3.** Zusammensetzung, im wesentlichen bestehend aus einem Ceroxid und einem Zirconiumoxid, **dadurch gekennzeichnet, daß** sie nach einer ersten Calcinierung bei 900°C über einen Zeitraum von 4 Stunden und dann einer weiteren Calcinierung bei 1000°C über einen Zeitraum von 10 Stunden eine Änderung ihrer spezifischen Oberfläche von höchstens 20% und nach einer ersten Calcinierung bei 900°C über einen Zeitraum von 4 Stunden und dann einer weiteren Calcinierung bei 1100°C über einen Zeitraum von 10 Stunden eine Änderung ihrer spezifischen Oberfläche von höchstens 20% aufweist.

**4.** Zusammensetzung auf Basis eines Ceroxids, eines Zirconiumoxids und mindestens eines Oxids eines anderen Seltenerdmetalls als Cer, **dadurch gekennzeichnet, daß** sie nach einer ersten Calcinierung bei 900°C über einen Zeitraum von 4 Stunden und dann einer weiteren Calcinierung bei 1000°C über einen Zeitraum von 10 Stunden eine Änderung ihrer spezifischen Oberfläche von höchstens 15% und nach einer ersten Calcinierung bei 900°C über einen Zeitraum von 4 Stunden und dann einer weiteren Calcinierung bei 1100°C über einen Zeitraum von 10 Stunden eine Änderung ihrer spezifischen Oberfläche von höchstens 20% aufweist.

5. Zusammensetzung nach Anspruch 3, **dadurch gekennzeichnet, daß** sie nach Calcinierung bei 900°C über einen Zeitraum von 4 Stunden eine Oberfläche von mindestens 8 $m^2$/g aufweist.

6. Zusammensetzung nach Anspruch 4, **dadurch gekennzeichnet, daß** sie nach Calcinierung bei 900°C über einen Zeitraum von 4 Stunden eine Oberfläche von mindestens 15 $m^2$/g aufweist.

7. Zusammensetzung nach einem der vorhergehenden Ansprüche, **dadurch gekennzeichnet, daß** sie nach Calcinierung bei 1000°C über einen Zeitraum von 10 Stunden eine spezifische Oberfläche von mindestens 8 $m^2$/g und weiter bevorzugt mindestens 15 $m^2$/g aufweist.

8. Zusammensetzung nach einem der vorhergehenden Ansprüche, **dadurch gekennzeichnet, daß** sie nach Calcinierung bei 1200°C über einen Zeitraum von 10 Stunden eine spezifische Oberfläche von mindestens 3 $m^2$/g aufweist.

9. Zusammensetzung nach einem der Ansprüche 1, 2, 4 und 6 bis 8 und auf Basis eines Ceroxids, eines Zirconiumoxids und mindestens eines Oxids eines anderen Seltenerdmetalls als Cer, **dadurch gekennzeichnet, daß** sie nach Calcinierung bei 1200°C über einen Zeitraum von 10 Stunden eine spezifische Oberfläche von mindestens 8 $m^2$/g aufweist.

10. Zusammensetzung nach einem der Ansprüche 3 bis 9, **dadurch gekennzeichnet, daß** sie nach einer ersten Calcinierung bei 900°C über einen Zeitraum von 4 Stunden und dann einer zweiten Calcinierung bei 1000°C über einen Zeitraum von 10 Stunden eine Änderung ihrer spezifischen Oberfläche von höchstens 10% aufweist.

11. Zusammensetzung nach einem der Ansprüche 3 bis 9, **dadurch gekennzeichnet, daß** sie nach einer ersten Calcinierung bei 900°C über einen Zeitraum von 4 Stunden und dann einer zweiten Calcinierung bei 1000°C über einen Zeitraum von 10 Stunden eine Änderung ihrer spezifischen Oberfläche von höchstens 5% aufweist.

12. Zusammensetzung nach einem der Ansprüche 3 bis 9, **dadurch gekennzeichnet, daß** sie nach einer dritten Calcinierung bei 1200°C eine Änderung der spezifischen Oberfläche, gemessen zwischen dem Wert für die Oberfläche nach Calcinierung bei 1000°C über einen Zeitraum von 10 Stunden und dem Wert für die Oberfläche nach Calcinierung bei 1200°C über einen Zeitraum von 10 Stunden, von höchstens 75% und vorzugsweise höchstens 60% aufweist.

13. Zusammensetzung nach einem der vorhergehenden Ansprüche, **dadurch gekennzeichnet, daß** sie ein Ceroxid/Zirconiumoxid-Massenverhältnis zwischen 10/90 und 90/10 und insbesondere zwischen 20/80 und 60/40 aufweist.

14. Zusammensetzung nach einem der Ansprüche 1, 2, 4 und 6 bis 13 und auf Basis eines Ceroxids, eines Zirconiumoxids und mindestens eines Oxids eines anderen Seltenerdmetalls als Cer, **dadurch gekennzeichnet, daß** sie ein Ceroxid/Zirconiumoxid-Massenverhältnis zwischen 0,25 und 4 und insbesondere zwischen 0,25 und 2 aufweist.

15. Zusammensetzung nach einem der Ansprüche 1, 2, 4 und 6 bis 14, **dadurch gekennzeichnet, daß** sie mindestens ein Oxid eines anderen Seltenerdmetalls als Cer, das unter Lanthan, Neodym und Praseodym ausgewählt ist, enthält.

16. Zusammensetzung nach einem der Ansprüche 1, 2, 4 und 6 bis 15, **dadurch gekennzeichnet, daß** sie einen Gehalt an Oxid eines anderen Seltenerdmetalls als Cer von höchstens 30 Masse-% und insbesondere höchstens 20 Masse-% aufweist.

17. Verfahren zur Herstellung einer Zusammensetzung nach einem der vorhergehenden Ansprüche, **dadurch gekennzeichnet, daß** man:

- (a) eine Mischung bildet, die eine Cerverbindung, eine Zirconiumverbindung und gegebenenfalls eine Verbindung des oben aufgeführten Seltenerdmetalls enthält;
- (b) die Mischung mit einer basischen Verbindung in Kontakt bringt, wobei man einen Niederschlag erhält;
- (c) den Niederschlag in wäßrigem Medium in einer geschlossenen Kammer auf eine Temperatur von mindestens 130°C erhitzt;

- (d) den im vorhergehenden Schritt erhaltenen Niederschlag mit einem Tensid des Typs carboxymethoxyliertes Fettalkoholethoxylat versetzt;

- (e) den so erhaltenen Niederschlag calciniert.

18. Verfahren nach Anspruch 17, **dadurch gekennzeichnet, daß** das Inkontaktbringen der oben aufgeführten Mischung mit der basischen Verbindung durch Eintragen der Mischung in die basische Verbindung in Form einer Lösung erfolgt.

19. Katalysatorsystem, **dadurch gekennzeichnet, daß** es eine Zusammensetung nach einem der Ansprüche 1 bis 16 umfaßt.

20. Verfahren zur Behandlung von Abgasen von Brennkraftmaschinen, **dadurch gekennzeichnet, daß** man als Katalysator ein Katalysatorsystem nach Anspruch 20 oder eine Zusammensetzung nach einem der Ansprüche 1 bis 16 verwendet.

## RÉFÉRENCES CITÉES DANS LA DESCRIPTION

**Documents brevets cités dans la description**

* FR 2570087 A

**Littérature non-brevet citée dans la description**

* **BRUNAUER ; EMMETT ; TELLER.** *The Journal of the American Chemical Society,* 1938, vol. 60, 309